# EUROPEAN PATENT SPECIFICATION

(11) **EP 3 561 300 B1**
(45) Date of publication and mention of the grant of the patent: **15.09.2021**
(21) Application number: 19170943.5
(22) Date of filing: 24.04.2019
(51) Int. Cl.: F04B 49/06, F04B 49/02, F04B 41/02, F04B 23/02

(54) **PULSE WIDTH MODULATION MOTOR CONTROL OF PRESSURIZER PUMP**
PULSWEITENMODULATIONSMOTORSTEUERUNG EINER DRUCKERZEUGERPUMPE
COMMANDE DE MOTEUR DE MODULATION DE LARGEUR D'IMPULSION DE POMPE DE PRESSURISEUR

(30) Priority: 24.04.2018 US 201862661911 P
(43) Date of publication of application: 30.10.2019
(73) Proprietor: Graco Minnesota Inc., Minneapolis, MN 55413 (US)
(72) Inventor: DION, Matthew P, St. Francis, MN 55070 (US); DANISKI, Joseph A, Minnetonka, MN 55305 (US)
(74) Representative: Miller Sturt Kenyon

(56) References cited:
- US-A1- 2006 204 367
- US-A1- 2010 043 409
- US-B1- 6 259 220

## Description

### BACKGROUND

The present invention relates generally to systems for pressurizing vessels, and more particularly to pressurizers in which an electric motor drives a pump to pump a fluid into a closed vessel to progressively raise pressure within the vessel.

Pressurizers are used to pressurize a fluid, such as a liquid or gas, within a closed vessel. In particular, pressurizers are often used in hydrostatic testing to evaluate the pressure performance of valves. In other applications, pressurizers are also used for a wide range of bolt tensioning and/or torqueing, botanical oil extraction, feeding hydraulic actuators, high pressure pasteurization, and laboratory research. It is desirable for a pressurizer to rapidly, precisely, and reliably pressurize a vessel to a selected target pressure, without overshooting. Moreover, some pressurizers must be capable of handling vessels of undetermined of differing volumes. Current designs for pressurizers often use an air drive, and require an attached pressurized air supply.

US 2010/0043409 discloses a method for controlling the operation of a pump driven by an electric motor and controlled by a controller, according to which an electronic control module (ECM) sends, to the controller, a PWM (Pulse Width Modulation) control signal having a duty cycle that varies as a function of the desired operating conditions for the pump and according to which the controller acts on the electric motor to apply said operating conditions to the pump.

### SUMMARY

According to a first aspect of the present invention, there is provided a pressurizer for building pressure of a fluid in a vessel according to claim 1.

According to a second aspect of the present invention, there is provided a method according to claim 13.

Prefereable features are set out in the remaining claims.

The present summary is provided only by way of example, and not limitation. Other aspects of the present disclosure will be appreciated in view of the entirety of the present disclosure, including the entire text, claims, and accompanying figures.

### BRIEF DESCRIPTION OF THE DRAWINGS

FIG. 1 is a perspective view of a pressurizer.
FIG. 2 is an exploded view of the pressurizer of FIG. 1.
FIG. 3 is an exploded view of a pump of the pressurizer of FIGs. 1 and 2.
FIG. 4 is a schematic block circuit diagram of a controller of the pressurizer of FIGs. 1 and 2.
FIG. 5 is a flowchart illustrating a first embodiment of a control method for the pressurizer of FIGs. 1 and 2.
FIG. 6 is a flowchart illustrating a second embodiment of a control method for the pressurizer of FIGs. 1 and 2.
FIG. 7 is a flowchart illustrating an optional expansion on the method FIG. 5.

While the above-identified figures set forth one or more embodiments of the present disclosure, other embodiments are also contemplated, as noted in the discussion. In all cases, this disclosure presents the invention by way of representation and not limitation. The figures may not be drawn to scale, and applications and embodiments of the present invention may include features and components not specifically shown in the drawings.

### DETAILED DESCRIPTION

This disclosure concerns a pressurizer controlled via pulse width modulation in response to sensed pressure. The pressurizer operates according to a method whereby pulse width modulated duty cycle settings are adjusted (i.e. increased) over the course of pressurization of a vessel through a plurality of gain levels, so as to increase pumping pressure until a target vessel pressure is achieved without overshooting the target pressure. This can be accomplished without need for a separate pressurized air supply, and while accounting for variation in target pressure and vessel characteristics.

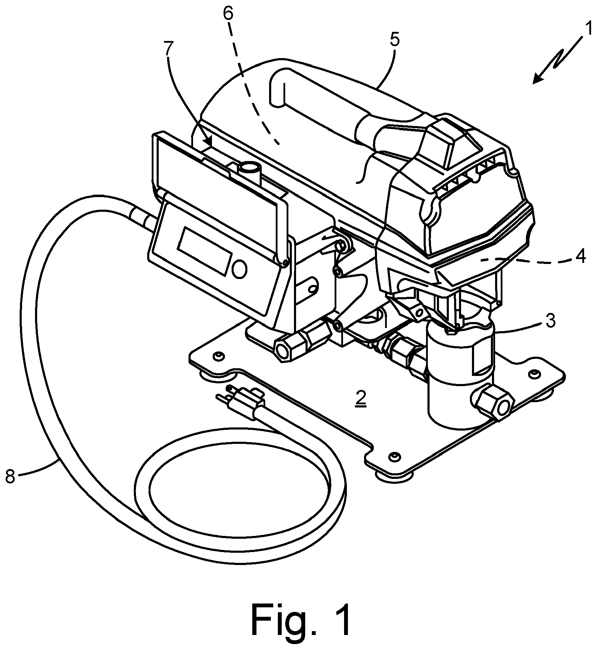

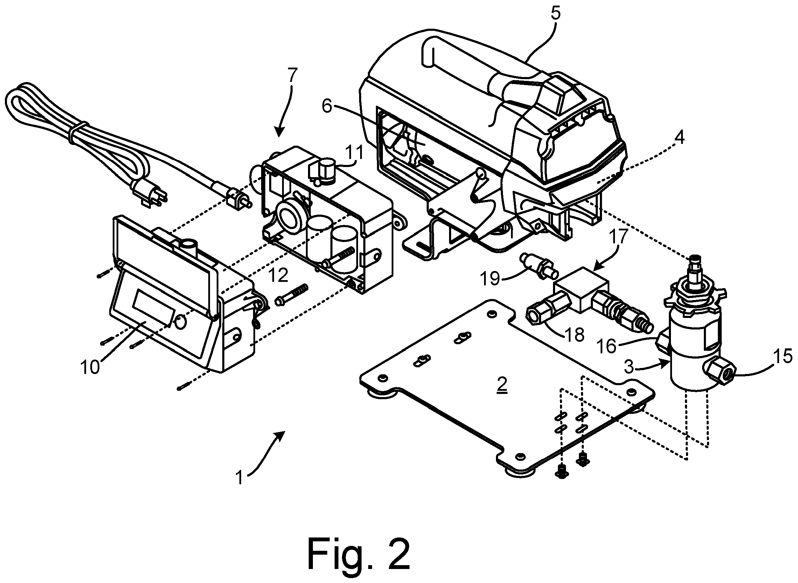

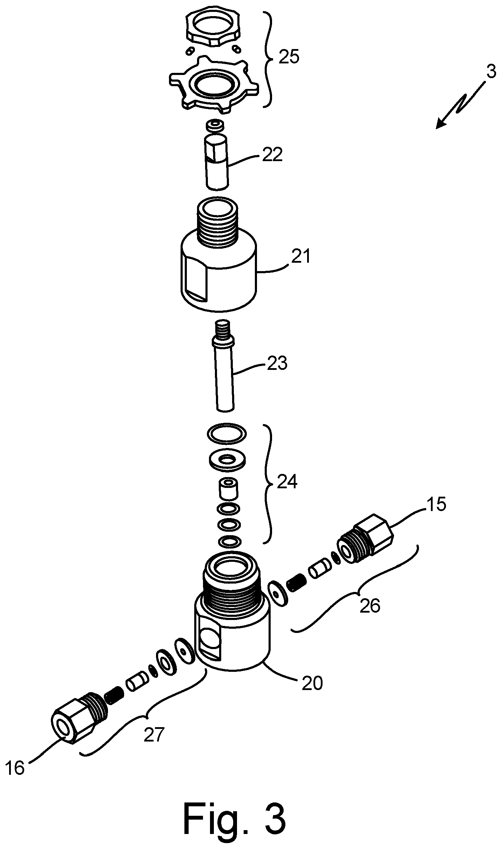

FIGs. 1 and 2 are perspective and exploded views, respectively, of pressurizer 1. Pressurizer 1 includes base 2, pump 3, mechanical drive 4, housing 5, motor 6, controller 7, and power supply 8 (see FIG. 1), as well as interface 10, input 11, and control circuitry 12 (see FIG. 2). Pump 3, in particular, includes pump inlet 15, pump outlet 16, manifold 17, first port 18, and transducer 19, and is further described with respect to FIG. 3.

Pressurizer 1 is a tool for precisely raising fluid pressure within a vessel (not shown) to a target pressure, without exceeding that target pressure. Base 2 supports and retains pump 3 and other components of pressurizer 1, and can for example be a metal plate or stand. Pump 3 is a fluid pump driven by motor 6 via mechanical drive 4, under the control of controller 7. Pump 3 is discussed in detail hereinafter as a piston pump, but can more generally be any precisely actuated and/or metered pumping system. Housing 5 is a protective enclosure surrounding, for example, mechanical drive 4, motor 6, and at least a portion of controller 7. Housing 5 can, for example, be a rigid case or shroud formed of one or more metal or polymer panels that surround various components of pressurizer 1.

Pump 3 is driven via mechanical drive 4 by motor 6. In the illustrated embodiment, motor 6 can be an electric rotor-stator type motor. More particularly, the motor 6 can be a brushless motor powered by a direct current signal. Mechanical drive 4 can, for example, include a bearing mounted on an eccentric rotated by motor 6. This bearing can rotate a crank or move a scotch yoke to reciprocate a piston of the pump 3 up and down. It will be understood that various other types of mechanical drives for converting rotational motion output by motor 6 to reciprocating motion to drive a pump can alternatively be used.

Controller 7 is an electrical control unit that commands motor 6 to achieve a target pressure via pump 3. As illustrated in FIG. 2, controller 7 can include interface 10, a display such as an alphanumeric display, gauge, light(s), and/or other type of information output for displaying messages such as pressure settings, measured pressure, pump selections, and/or alerts (e.g. leak conditions). Controller 7 can also include input 11, a device such as a dial, slide, button group, touch screen, potentiometer, or other type of input element for receiving data for a user setting operational parameters for the pressurizer 1. In some embodiments, input 11 can be a transducer disposed to communicated (e.g. wirelessly) with a separate logic-capable device. Input 11 is used to input a pressure setting. Generally, a user or auxiliary process can provide a higher or lower pressure setting via input 11. Motor 6 drives pump 3 to build pressure with a vessel to this target pressure. Input 11 can, in some embodiments, also be used to specify other operating parameters, such as vessel volume.

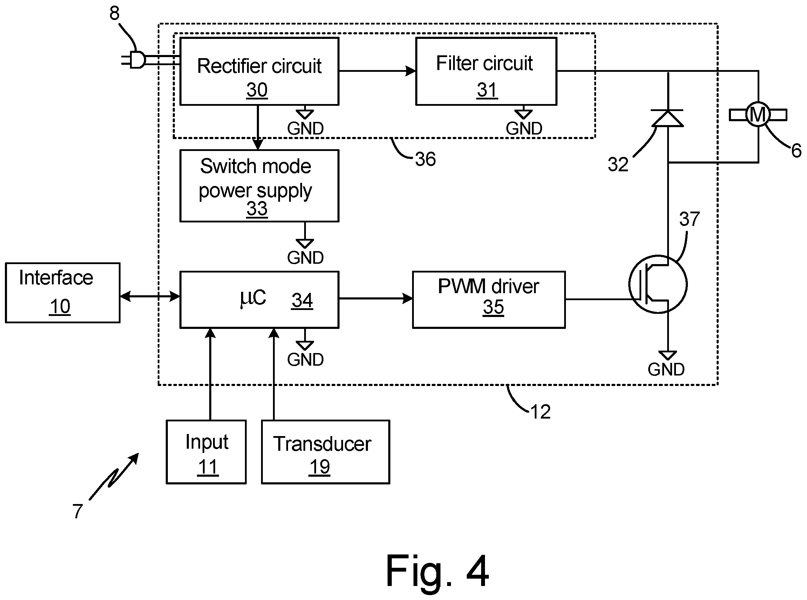

Controller 7 receives inputs from one or more transducers, including transducer 19 as described in further detail below. Controller 7 also includes control circuitry for operating motor 6, as presented in greater detail with respect to FIG. 4, and is powered via power supply 8, which is depicted in FIG 1 as an electrical cord for connecting to a conventional wall outlet. More generally, any power supply (e.g. batteries, generators) can be used.

Pump 3 can, for example, be an intensifier pump with a suitable piston size ratio. Pump 3 takes fluid in through the pump inlet 15 (typically via suction on an upstroke) and outputs the fluid, under pressure, through pump outlet 16. In the particular embodiment shown in FIGs 1 and 2, fluid output through the pump outlet 16 travels through manifold 17.

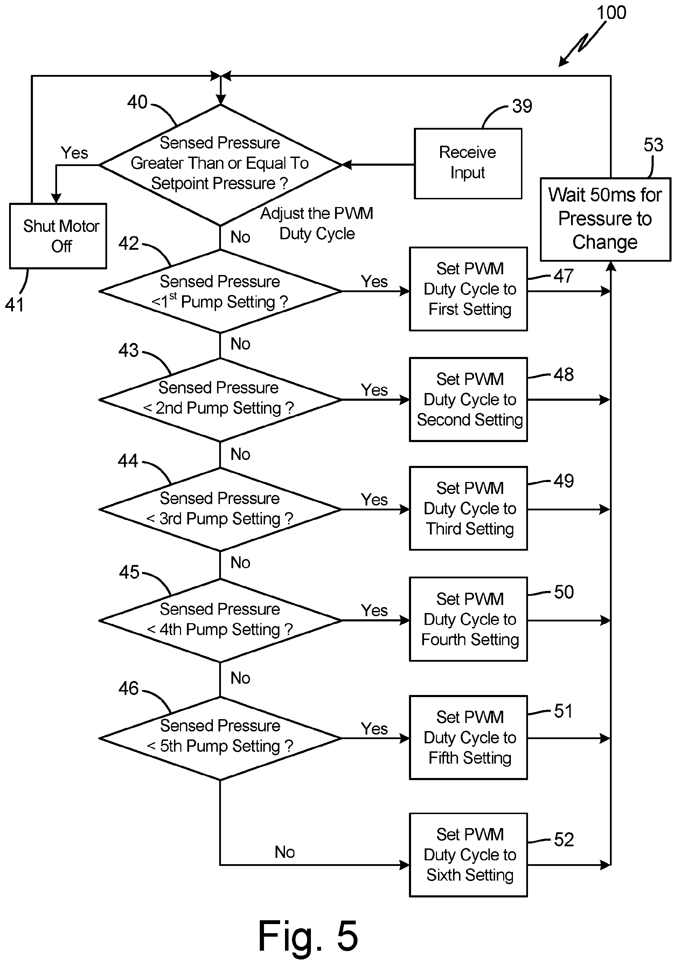

Manifold 17 is a fluid routing structure that can include various outlets, including first port 18. A vessel to hold pressurized fluid can be attached to first port 18, e.g. for testing. Alternatively, first port 18 can be a burst relief port that releases fluid upon occurrence of an over-pressurization event, and a target vessel for pressurization can be attached to a separate second port, e.g. opposite first port 18. A transducer 19 is a sensor disposed to measure a parameter of the fluid output from the pump 3. In various embodiments, transducer 19 measures fluid pressure within the manifold 17. Transducer 19 can, for example, be a strain gauge capable of producing a pressure reading representing a pressure output of pump 3. This pressure measurement can be indicative of pressure within the vessel. Based on the measured pressure, transducer 19 outputs a signal that can be routed to the controller 7. In particular, this signal can be received by control circuitry 12 (see FIG. 4), and can be used to adjust a drive signal output to operate motor 6 and thereby pump 3 as discussed further hereinafter with respect to FIGs. 5-7.

Pump 3 includes a pump inlet 15 and pump outlet 16, and is described in greater detail with respect to FIG. 3. FIG. 3 provides an exploded view of pump 3 further illustrating lower cylinder 20, upper cylinder 21, piston head 22, piston rod 23, seal 24, connector 25, and check valves 26 and 27. Lower cylinder 20 can be attached to the upper cylinder 21 by a threaded interface to define a cylinder in which a positive displacement element reciprocates. In this case, the positive displacement element is a piston formed by piston head 22 and piston rod 23. The piston head 22 can be attached to piston rod 23, such as by threaded attachment. Seal 24 forms a seal between an inner surface of the cylinder formed by lower cylinder 20 and upper cylinder 21, and an outer surface of the piston rod 23, thereby preventing leakage of fluid along piston rod 23 as fluid is pumped. Connector 25 attaches the upper cylinder 21 to mount the pump 3 to the mechanical drive 4.

Pump 3 additionally includes inlet and outlet check valves 26 and 27, respectively. Inlet check valve 26 and outlet check valve 27 cooperate to regulate the flow of the fluid through the pump 3. Check valves 26, 27 are situated in line with the chamber that piston rod 23 plunges. As piston rod 23 reciprocates, the working volume of the chamber of pump 3 increases and decreases. Piston rod 23 expands the volume of the chamber on the upstroke, creating a vacuum condition that pulls fluid through the inlet 15, past inlet check valve 26, and into the chamber. In at least some embodiments, piston head 22 and piston rod 23 can together form an asymmetric piston with a piston size ratio (top:bottom) greater than one.

On the upstroke of piston rod 23, outlet check valve 27 closes to prevent retrograde flow of downstream fluid back into the chamber. On the downstroke of piston rod 23, the volume of the chamber is decreased, forcing the fluid from the chamber while inlet check valve 26 closes to prevent fluid from the chamber from traveling upstream towards inlet 15. Fluid is forced from the chamber past outlet check valve 27, which can, for example, be passively actuated by the flow of fluid towards the outlet 16. This cycle of reciprocation from upstroke to downstroke is repeated to pull in upstream fluid and force the fluid downstream (i.e. via manifold 17) to pressurize an attached vessel.

FIG. 4 presents a schematic diagram of controller 7, and illustrates interface 10, input 11, control circuitry 12, and transducer 19 as described above with respect to FIGs 1 and 2. Control circuitry 12 includes power conditioning circuit 36, switch mode power supply 33, microcontroller 34, pulse width modulation (PWM) driver 35, semiconductor switch 37, and flyback diode 32. Control circuitry 12 receives input from interface 10, input 11, transducer 19, and/or other sources. Using these inputs, control circuitry 12 controls operation of motor 6, which drives pump 3 via mechanical drive 4, as set forth above.

Control circuitry 12 can be entirely or partially mounted on a circuit board or formed as an integrated circuit. Control circuitry 12 can, for example, be powered by standard line(or grid power received from power supply 8 (e.g., a 120 volt 60 Hertz AC, or a 230 volt 50 Hertz AC, or other regionally standard line or grid power). AC power from power supply 8 is converted to a DC voltage by power conditioning circuit 36. Rectifier circuit 30 receives the AC power from power supply 8 and full wave rectifies the power to produce rectified power. In this embodiment, filter circuit 31 conditions or smooths this rectified power to create DC voltage supplied to the motor 6. In alternative embodiments, power supply 8 be a source of DC power such as a battery, and consequently require no rectification.

Switch mode power supply 33 receives DC power from power conditioning circuit 36 (or analogous DC source) and generates supply voltage used by PWM driver 35 to produce a PWM drive signal that turns semiconductor switch 37 on and off with a duty cycle determined by the PWM drive signal.

Microcontroller 34 receives multiple inputs, at least including signals from input 11 and transducer 19. In some embodiments, microcontroller 34 can also receive input from interface 10, and send information to interface 10 such as data for display on a screen or other output device. Based upon inputs, microcontroller 34 outputs a PWM command signal to PWM driver 35. In various embodiments, the PWM command signal has a frequency in the range of 16-32 kHz. Microcontroller 34 determines the duty cycle of the command signal to achieve a desired target pressure within the pressurizing vessel, based upon the inputs from input 11, transducer 19, and/or interface 10, as described in greater detail below with respect to FIGs. 5-7. Microcontroller sets on and off times of semiconductor switch 37 based on this duty cycle.

The PWM drive signal from PWM driver 35 is supplied to semiconductor switch 37, which is shown as an insulated gate bipolar transistor (IGBT). Switch 37 has a control electrode (gate), a first main current carrying electrode (collector), and a second main current carrying electrode (emitter). Switch 37 turns on and off in response to the PWM drive signal received at its gate. Microcontroller 34 can include, among other subcomponents, a digital processor and memory storing program instructions thereon which, when executed by the processor, perform the functions and methods described herein, e.g. with respect to FIGs. 5-7. Microcontroller 34 calculates and outputs the high-speed pulse width modulation (PWM) command signal to PWM driver 35 to set a duty cycle for powering motor 6. More specifically, motor 6 is powered by a rapid series of voltage pulses (e.g., 165 volts DC), rather than by a continuous direct current. Each pulse is part of a cycle having an "on" portion and an "off' portion. The pulses are modulated in width (duration) over the cycle to deliver a greater or lesser amount of energy to motor 6 to increase or decrease the speed of and/or power output of motor 6, and consequently of pump 3. For each cycle, the duty or "on" portion can be expressed as a percentage of the total cycle time. The duty cycle in this sense ranges from 0% (off; no on pulse) to 100% (pulse on fully throughout the cycle). A 10% duty cycle means that the width of the PWM command signal is such that current is being run through the motor 6 for 10 % of the cycle while the motor 6 is on (being powered). The period of each cycle is sufficiently short that motor 6 continues to operate during the remaining 90% of the cycle (i.e. the "off' portion) because of the short duration of each cycle.

Microcontroller 34 outputs the PWM command signal to PWM driver 35, which provides the PWM drive signal to the gate of switch 37, causing switch 37 to turn on and off according to the frequency and duty cycle established by the PWM command signal. Specifically, switch 37 turns on when the duty cycle is on (corresponding to voltage delivery to motor 6, i.e. a pulse) and turns off when the duty cycle is off (corresponding to no voltage delivery to motor 6, i.e. between pulses). Flyback diode 32 bridges the motor 6 to freewheel during the off portion of the duty cycle while blocking potentially damaging back voltage generated by the motor 6. In operation, microcontroller 34 outputs the PWM command signal to PWM driver 35 to cause switch 37 to turn on and off at the commanded frequency and duty cycle to cause current flow through motor 6.

The duty cycle of the PWM signal delivered to the motor 6 is variable. Specifically, the duty cycle of the PWM command signal can be calculated and dynamically changed or adjusted by microcontroller 34 based on various factors and inputs. The operation of microcontroller 34 in determining when to deliver a power signal to the motor 6 (e.g., when to turn the motor 6 entirely on or off), and in setting the duty cycle of the powering signal when the motor 6 is on, can be determined by various algorithms, as described in greater detail below with respect to FIG. 5-7. Most generally, duty cycles of delivery to motor 6 can be determined analytically, or can be selected from modes or schedules modes, or by combinations thereof.

FIGs. 5-7 are flowchart representing steps of methods executed as program instructions by microcontroller 34 and/or other logic circuitry of control circuitry 12. While some steps are affirmatively shown, a person skilled in the art will understand that variations of the illustrated algorithms can be added or substituted without departing from the scope and spirit of the present disclosure.

FIG. 5 illustrates method 100. According to this method, an input is received in step 39. This input can be any information referenced herein, and in some embodiments can include one or more pump parameters. The input can include a pressure setting from input 11. In typical operation, the user turns the input 11 dial to increase or decrease a desired pressure setting for the vessel. As input 11 is manipulated, a target pressure can, for example, be displayed and updated on the interface 10. In this way, the user receives feedback while selecting a target pressure, and can stop manipulating input 11 or can provide another input, such as pressing a button of interface 10, to confirm the pressure input setting. Although step 39 is primarily disclosed herein as receiving a user input, input can alternatively or additionally be received or retrieved from a reference source, or received from further electronics which may or may not require user interaction. Step 39 of receiving input can include the microcontroller 30 receiving information concerning the type of pump 3 and/or vessel being used. Such data can, for example, include a vessel volume and/or pump displacement. In some embodiments, these parameters may be retrieved directly from the vessel or pump themselves, e.g. via RFID signals or other on-part indexing. Various different types and sizes of pumps 3 can be used with the pressurizer 1, and can have different pressure ratings. Pressure rating can, for example, be the maximum pressure that the pump 3 is intended to build or otherwise handle (although, due to a built-in factor of safety, the pump may be able to withstand greater pressures). For example, a first pump may have a pressure rating of 10,000 psi, a second pump may have a pressure rating of 15,000 psi, a third pump may have a pressure rating of 20,000 psi, a fourth pump may have a pressure rating of 25,000 psi, a fifth pump may have a pressure rating of 35,000 psi, amongst other options. The pressurizer 1 may not allow a particular pump to be used beyond its pressure rating, and may prevent delivery of power to the motor 6 if this would result in an applied pressure exceeding the pressure rating of the pump. This can be accomplished by ensuring that pressurizer 1 does not further pressurize a vessel if/when pressure sensed by transducer 19 exceeds the pressure rating of the pump. The pressure rating can be part of received pump parameters that are then set as an upper limit on the pressure that the pressurizer 1 will drive to.

In some embodiments, interface 10 can allow a user to select a model of pump 3. Information for various types of models of pumps 3 (e.g. pressure rating) can be stored in memory of the control circuitry 12 (e.g. in microcontroller 34 or separate memory, not shown). Operational parameters associated with those various types of models of pumps 3 can also be stored in memory and can be called up and used when a corresponding pump is selected (input) by user via the interface 10. In this way, the pump parameters may be retrieved in step 39 by the user selecting or otherwise inputting the type of pump being used and the particular pump parameters (e.g., pressure rating) being referenced from memory storage on board the pressurizer 1 based on the pump selection. Alternatively or additionally, some embodiments can permit user may manually enter or adjust parameters describing pump 3 and/or the vessel to be pressurized.

Pressure can be sensed in step 40. This pressure can be sensed by transducer 19, which is connected in fluid communication with output from the pump 3, as noted above. Further in step 40, the sensed pressure is compared to a setpoint pressure corresponding to a target pressurization value. If the sensed pressure is greater than or equal to the setpoint pressure, then the algorithm advances to step 41 and the motor 6 is shut off. The shutting off of motor 6 in this case represents an indefinite interruption of power delivery to the motor 6 until the pressure setting is greater than the sensed pressure.

Returning to step 40, if the sensed pressure is less than the setpoint pressure, then method 100 proceeds to one or more of a series of comparisons in steps 42-46. In these steps, the sensed pressure of step 40 is successively compared to a number of increasing pump settings. FIG. 5 illustrates fives steps 42-46 wherein sensed pressure is compared to a series of increasing pump settings, but more generally any number of pump settings can be used. The number of distinct pump settings addressed in method 100 can be selected to provide adequate granularity in duty cycle adjustment to rapidly drive sensed pressure towards the setpoint pressure without overshooting. Each pump setting can, for example, correspond to a percentage of the setpoint pressure, or of a pump rating. For example, the first pump setting can be a value that is 5% of the pump rating of the pump 3. If the first pump setting is 5% (or other percentage) of the pressure rating of the pump 3, then the comparison of step 42 assesses whether the measured pressure is at least 5% of the pressure rating of the pump 3. Steps 43-46 perform similar comparisons to step 42 but for different, successively greater pump settings. Returning to the embodiment in which the pump settings are percentages of the pump rating, the second pump setting can be a value that is 30% of the pump rating. The third pump setting can be a value that is 50% of the pump rating. The fourth pump setting can be a value that is 70% of the pump rating. The fifth pump setting can be a value that is 80% of the pump rating. Other percentages are possible. In general, the pump settings addressed by comparisons 42-46 need not be distributed evenly. In some embodiments, pump settings referenced in steps 42-46, and even a number of comparison steps of this type, can be determined based inputs received in step 39.

Comparisons 42-46 determine how close the current sensed pressure is to a pump setting, and select a corresponding PWM duty cycle in steps 47-52. Returning to the embodiment wherein pump settings represent percentages of the pump rating, method 100 thus selects the duty cycle of the PWM signal to motor 6 based on how close the current sensed pressure is to the pressure rating of the pump 3. Steps 47-52 concern applying different pulse width modulation duty cycle settings to the motor 6 based on the sort of steps 42-46. Generally, the first setting of the PWM duty cycle corresponds with a lower duty cycle, while the second setting corresponds to a higher duty cycle, the third, fourth, and fifth settings correspond to successively higher duty cycles, with the sixth setting corresponding to the highest duty cycle. While six settings are shown, it is possible to have two, three, four, five, seven or more different settings, each corresponding to a different (e.g., increasing) pressure threshold. Likewise, while five pump settings are shown in connection with comparisons 42-46, two, three, four, six, or more pump settings could be used for a finer or courser sort, each corresponding to a different (e.g., increasing) duty cycle value.

The first setting of step 47 can be a 5% duty cycle. The second setting of step 48 can be 7% duty cycle. The third setting of step 49 can be 10% duty cycle. The fourth setting of step 50 can be a 14% duty cycle. The fifth setting of step 51 can be a 22% duty cycle. The sixth setting of step 52 can be a 35% duty cycle. Other duty cycle percentages are possible.

Comparisons 42-46 assign a duty cycle based on the sensed pressure, such that a lower measured pressure will result in a lower duty cycle PWN signal being output to motor 6 and a higher measured pressure will result in a higher duty cycle PWN signal being sent to motor 6. This duty cycle selection serves several purposes. In general, it is desirable - sometimes even required - that pressurizer 1 not overshoot the pressure setting input by the user. If pressure is overshot, then fluid would have to be exhausted or the pressure would otherwise have to be relieved to get down to the pressure setting (assuming the pressurizer 1 outputs to a closed system). Pump 3 can, in some embodiments, be an intensifier pump with no means to automatically relieve pressure. Consequently, a lower PWM duty cycle is used when the measured pressure is low so as to maintain the speed and/or power of motor 6 as long as the sensed pressure is relatively low. High power delivery to the motor 6 is generally not needed when pressure is low because pump 3 can efficiently pump when fluid pressure is well below the pressure rating of the pump 3. However, as pressure builds, more power is needed to pump additional fluid downstream of the pump 3 (i.e. into the pressurized vessel). Steps 42-52 therefore increase the duty cycle output to motor 6 as the measured pressure builds (e.g., approaches the pressure rating of the pump 3). As pressure increases, the concern of overshooting the pressure setting is lessened because each cycle of the pump 3 contributes less marginal pressure increase for each cycle of the pump 3, because the pump 3 does not operate as efficiently as the pressure approaches the pressure rating of the pump 3. Therefore, the steps of 42-52 cause a relatively low PWM duty cycle driving signal to be delivered to the motor 6 when the pressure measured downstream of the pump 3 is low, but permit a relatively high PWM duty cycle driving signal to be delivered to the motor 6 when the pressure measured downstream of the pump 3 is high. Returning to the embodiment in which the pump settings of steps 42-46 are percentages of the pressure rating of the pump 3, and the settings of steps 47-52 are PWM duty cycle settings, the PWM duty cycle is low when the measured pressure is low and the PWM duty cycle is high when the measured pressure is high, to balance overshoot risk with supplying sufficient power to efficiently achieve high pressures. In general, steps 42-52 of method 100 escalate the duty cycle of motor 6 (and thus the power of pump 3) as ΔPₘₐₓ decreases, where ΔPₘₐₓ is a measure of the difference between the sensed pressure and the pressure rating of pump 3. According to this and other methods encompassing some embodiments of the present invention, controller 7 repeatedly increases the duty cycle of motor 6 as sensed pressure approaches the setpoint pressure, and halts power delivery to motor 6 in response to the sensed pressure exceeding the setpoint pressure.

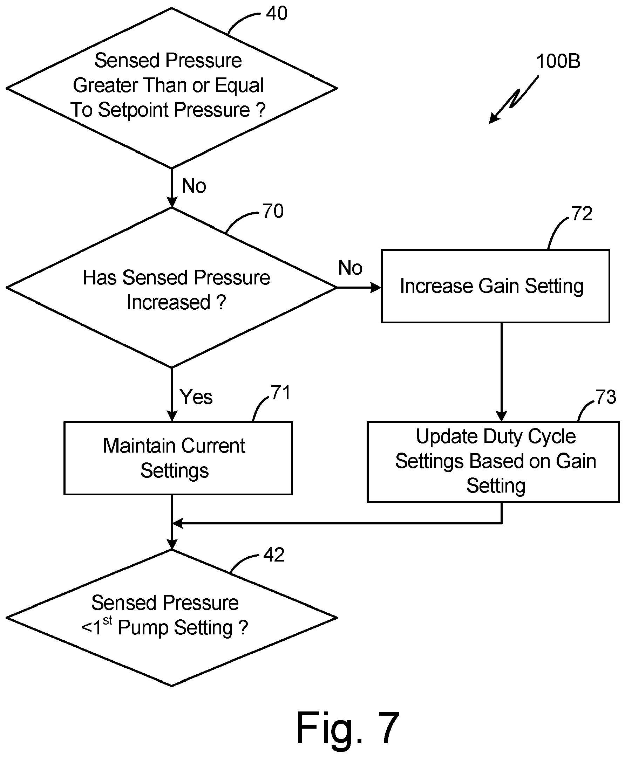

In some embodiments, the step 39 of receiving input includes receiving a gain parameter. This gain parameter can relate to the size of the vessel being pressurized. The larger the vessel being pressurized, the lower the risk of overshooting a target setpoint pressure. With large vessels, the motor 6 can consequently drive pump 3 harder so that the pressure building process is not prolonged. In which case, the user may put in a gain setting that scales with the size of the vessel being pressurized. Gain in this context may be referred to as sensitivity. Gain values can correlate with the size of the vessel being pressurized. For example, for 10 different sizes of vessels, 10 different gain values can be used. The different settings of the PWN duty cycle may be multiplied or otherwise increased by the input gain. For example, a gain of 1 (i.e. a Ix gain multiplier) may be used for the smallest vessels and results in no increase in the settings (e.g., as equally applied to the first setting, second setting, third setting etc.). A gain of 2 may be used for larger vessels, and the gain value of 2 maybe multiplied or otherwise used to increase the settings (e.g., as equally applied to the first setting, second setting, third setting etc.). A gain of 3 may be used for even larger vessels, and the gain value of 3 maybe multiplied or otherwise used to increase the settings (e.g., as equally applied to the first setting, second setting, third setting etc., although differences across settings may not be linear and/or uniform in all embodiment). Larger gain values can correspondingly increase the settings by larger amounts. Available gain values need not be separated by identical intervals, and can in some embodiments be preselected to correspond to known vessels. Furthermore, although gain values can be preselected as described above, alternative embodiments within the scope of the present disclosure may use non-incrementally (e.g. analytically) generated gain values. In addition, gain values can also be adjusted to maintain effectiveness of pump 3 as pressure increases, as described in greater detail below with respect to FIG. 7

Some embodiments of method 100 can include a dwell step 53. In this step, the algorithm waits a period of time following any of the steps 47-52 of setting of the PWM duty cycle. Although method 100 illustrates a 50 ms dwell time, this or any other time period can be inserted to allow pressurization of the vessel between iterations of method 100. The drive signal is sent to motor 6 during this time period. Dwell step 53 allows the pressure to change before the algorithm cycles. After the dwell step 53, method 100 returns to step 40 to sense the pressure using transducer 19. In some cases, the algorithm can also check to see if a new pressure setting was input with each cycle. As the algorithm cycles, it is expected that the pressure will build and the sense pressure higher than the previous sorted pressure of steps 42-46 until the pressure setting is reached the PWM duty cycle being increased during some iterations of the algorithm.

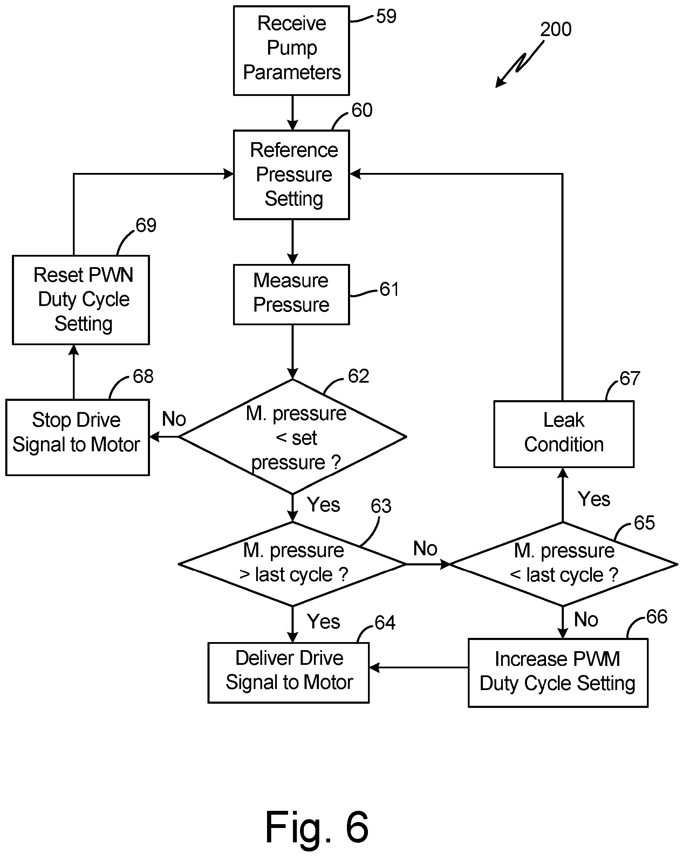

A further benefit of starting at a low duty cycle before increasing the duty cycle as pressure builds is to mitigate the risk of a leak downstream of the pump 3. If a leak develops in the vessel, it is not desirable for there to be a high flow and/or high-pressure fluid escaping from the system. Having a relatively low PWM duty cycle of the first setting or the second setting (e.g., steps 42, 43) when the measured pressure is a relatively low, reduces the likelihood that leaking fluid will be output in high volume and/or at high pressure, as the power of pump 3 is initially low. The algorithm will likely only progress through the second pump setting and the third pump setting (e.g., steps 43, 44) and so forth if the fluid system is able to hold pressure and no leak is present, in which case the duty cycle will be increased and the motor 6 will drive the pump 3 harder to build up even greater pressure. Leak detection is discussed further below with respect to FIG. 6.

While the illustrated embodiment of method 100 uses a series of comparisons to sort and determine the PWM duty cycle of motor 6, some alternative embodiments of method 100 and pressurizer 1 need not use such sorting steps. Instead, the PWM duty cycle can be increased as long as pressure continues to build. One such method is illustrated in FIG. 6 as method 200. Method 200 includes the step 59 of receiving input, substantially as described above with respect to step 39 of method 100. The input can include one or more pump parameters, and/or a pressure setting. Method 200 further includes the step 60 of referencing the pressure setting. The pressure setting can be a target pressure set by the user as discussed above, such as via input 11. Step 60 can reference an input of step 59. Reference step 60 permits adjustment of pressure (e.g. by the user) during or between iterations of the algorithm.

Method 200 further includes step 61 of measuring pressure. The pressure can be sensed by transducer 19. This sensed pressure is compared with the pressure setting in step 62. If the measured pressure is not less than the pressure setting, then the algorithm advances to step 68 of stopping the drive signal to the motor 6 as no more pumping is needed (i.e. the target pressure has been achieved). The PWM duty cycle is then reset in step 69 and the algorithm returns to step 60 to reference the pressure setting to check whether the pressure setting has changed. If the measured pressure is less than the pressure setting, then method 200 advances to step 63, wherein the measured pressure of the current cycle is compared to the measured pressure of the last cycle (e.g., step 61 of the last iteration of the algorithm). If the measured pressure is not greater than the measured pressure of the last cycle, the algorithm procedes to step 65. In step 65 the measured pressure is again compared to the measured pressure of the last cycle, and a measured current pressure less than the measured pressure of the last cycle is recognized as a likely leak condition (step 67). If a leak is detected at step 67, a fault condition can be registered and stored in memory, and an alarm can be issued and/or the delivery of energy to the motor 6 can be stopped. If the measured current pressure has stalled (i.e. is no greater than the last cycle's pressure as determined at step 63, but also no less as determined at step 65), then pressurization has temporarily stalled, and method 200 advances to step 66 to increase the PWM duty cycle setting, thereby increasing the pumping power of pump 3. In some embodiments, this stall determination may include a minimum margin, i.e. such that the current pressure is determined to have stalled (causing the method to advance to step 66) if the current measured pressure does not exceed the previous iteration's measured pressure by at least a minimum amount.

After increasing the PWM duty cycle of pump 3 (at step 66) or determining that no such increase is necessary (at step 63), method 200 advances to step 64 to deliver the drive signal to the motor 6. The algorithm can return to step 60 to reference the pressure setting in a subsequent iteration. Returning to step 63, if the measured pressure is greater than the measured pressure of the last cycle, meaning that the pump 3 is building pressure at the current duty cycle of the motor 6, then the duty cycle is not increased (i.e. step 66 is bypassed) and the duty cycle of the last iteration is maintained to deliver the drive signal to the motor in step 64.

Method 200 maintains a constant PWM duty cycle as long as pressure is building, but increases the duty cycle once it is insufficient to continue to increase pressure towards a target value. Method 200 additionally provides leak detection (step 67), as set forth above.

Methods 100 and 200 can in some embodiments be partially combined or integrated. FIG. 7 illustrates an exemplary case of one such partial combination, as set forth in sub-method 100b. Sub-method 100b is an expansion of method 100 as set forth in FIG. 5, with additional method steps 70-73 inserted between steps 40 and 42 of method 100. In step 70, after determining that sensed pressure is less than setpoint pressure in step 40, sensed pressure is compared to the sensed pressure of the previous cycle, analogously to comparison 63 of method 200. If sensed pressure has increased since the last iteration, current settings are maintained (step 71), and sub-method 100b advances to step 42 of method 100, as described above with respect to FIG. 5. If the sensed pressure has not increased however, this potential stall condition is addressed at step 72 by increasing a gain setting of the PWM duty cycle of motor 6. This increase in gain can be slight, and serves to permit the next iteration of method 100/100b to further pressurize the vessel, analogously to step 66 of method 200. Although not depicted in FIG. 7, some embodiments of this algorithm can also compare current against previous sensed pressures to detect decreases in pressure corresponding to possible leak conditions, as discussed with respect to steps 65 and 67 of method 200. Once the gain setting has been increased at step 72, duty PWM duty cycle settings are updated based on the gain setting at step 73 to increase pump power, and method 100 proceeds from step 42.

Methods 100, 200, and 100b illustrate algorithms by which pressurizer 1 adjusts pumping power by adjusting PWM duty cycles. Method 100 advantageously escalates pumping power as current sensed pressure approaches a pump rating, thereby permitting efficient pressurization as pump approaches its maximum pressurization capacity. Method 100 thus scales pump power at least partially as a function of pump rating. Method 200 escalates pumping power when successive iterations of the control algorithm no longer produce increases in sensed pressure, and thus scales pump power at least partially independently of pump rating, to prevent stall and detect leakage. Method 100b modifies method 100 to incorporate some algorithm elements from method 200, thereby preventing stall (and potentially detecting leakage) while also accounting for pump rating.

### Discussion of Possible Embodiments

The following are non-exclusive descriptions of possible embodiments of the present invention.

A pressurizer for building pressure of a fluid in a vessel, the pressurizer comprising: a pump having an outlet disposed to deliver the fluid to the vessel; a motor configured to drive the pump according to a pulse-width modulated (PWM) drive signal; and a controller configured to deliver the PWM drive signal to the motor; and a transducer configured to generate a pressure signal indicative of a pressure of the fluid at the outlet, and to deliver the pressure signal to the controller, wherein the controller is configured to adjust a duty cycle of the PWM drive signal based on the pressure signal.

The pressurizer of the preceding paragraph can optionally include, additionally and/or alternatively, any one or more of the following features, configurations and/or additional components:
A further embodiment of the foregoing pressurizer, wherein the controller is configured to adjust the duty cycle of the PWM drive signal based on a parameter of the pump.
A further embodiment of the foregoing pressurizer, wherein the parameter of the pump is a pressure rating of the pump.
A further embodiment of the foregoing pressurizer, wherein the controller is configured to initially select a first duty cycle, and is further configured to increase this duty cycle as the pressure signal increases.
A further embodiment of the foregoing pressurizer, wherein the controller is configured to compare a measured pressure to a plurality of successively increasing thresholds, selecting a duty cycle corresponding to the first of the plurality of successively increasing thresholds that the measured pressure exceeds.
A further embodiment of the foregoing pressurizer, wherein each of the plurality of thresholds corresponds to a different percentage of the pressure rating of the pump.
A further embodiment of the foregoing pressurizer, wherein the controller is configured to increase the duty cycle as the pressure signal approaches the pressure rating of the pump.
A further embodiment of the foregoing pressurizer, wherein the controller is configured to adjust the duty cycle across successive control iterations, and to store a pressure signal of a previous iteration.
A further embodiment of the foregoing pressurizer, wherein the controller is configured to flag a potential leak condition in the event that the stored pressure signal of the previous iterations exceeds a current pressure signal.
A further embodiment of the foregoing pressurizer, wherein the controller is configured to halt delivery of power to the motor in the event of the potential leak condition.
A further embodiment of the foregoing pressurizer, wherein the controller is configured to increase a duty cycle of the PWM drive signal in the event that the stored pressure signal of the previous iteration matches a current pressure signal.
A further embodiment of the foregoing pressurizer, wherein the controller is configured to receive a gain setting, and adjust a duty cycle of the PWM drive signal based on the gain signal.
A further embodiment of the foregoing pressurizer, wherein the gain setting is one of a plurality of alternative gain settings boosting the duty cycle of the PWM drive signal by different amounts.
A further embodiment of the foregoing pressurizer, wherein the plurality of alternative gain settings are preset gain settings corresponding to different known vessel sizes.

A method of operating a pressurizer comprising a pump driven by a motor, the method comprising: sensing an output pressure of the pump; generating a PWM drive signal based at least in part on the sensed output pressure; and driving the motor with the PWM drive signal.

The method of the preceding paragraph can optionally include, additionally and/or alternatively, any one or more of the following features, configurations and/or additional components:
A further embodiment of the foregoing method, wherein generating the PWM drive signal comprises: selecting an initial PWM duty cycle; comparing the sensed output pressure against a reference pressure; adjusting the initial PWM duty cycle based on the comparison; and providing the PWM drive signal with the adjusted PWM duty cycle.
A further embodiment of the foregoing method, wherein comparing the sensed output pressure against a reference pressure comprises comparing the sensed output pressure to a pump setting, and wherein adjusting the initial PWM duty cycle comprises increasing the PWM duty cycle in the event that the sensed output pressure exceeds the pump setting.
A further embodiment of the foregoing method, wherein the pump setting is a percentage of a pump rating of the pump.
A further embodiment of the foregoing method, wherein comparing the sensed output pressure against a reference pressure comprises comparing the sensed output pressure to a stored output pressure sensed in a previous iteration of the method, and wherein adjusting the initial PWM duty cycle comprises increasing the PWM duty cycle in the event that the sensed output pressure does not exceed the stored output pressure.
A further embodiment of the foregoing method, further comprising comparing storing an indicator of a fault condition in the event that the sensed output pressure falls below the stored output pressure.

### Summation

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, alignment or shape variations induced by thermal, rotational or vibrational operational conditions, and the like.

While the invention has been described with reference to an exemplary embodiment(s), it will be understood by those skilled in the art that various changes may be made and equivalents may be substituted for elements thereof without departing from the scope of the appended claims.

## Claims

1. A pressurizer (1) for building pressure of a fluid in a vessel, the pressurizer comprising:
a pump (3) having an outlet (16) disposed to deliver the fluid to the vessel;
a motor (6) configured to drive the pump according to a pulse-width modulated (PWM) drive signal;
a controller (7) configured to deliver the PWM drive signal to the motor; and
a transducer (19) configured to generate a pressure signal indicative of a pressure of the fluid output from the pump, and to deliver the pressure signal to the controller,
wherein the controller is configured to initially specify a first duty cycle of the PWM drive signal, and is further configured to increase this duty cycle based on the pressure signal indicating that the pressure of the fluid output by the pump has increased.

2. The pressurizer (1) of claim 1, wherein the controller (7) is configured to adjust the duty cycle of the PWM drive signal based on a parameter of the pump (3).

3. The pressurizer (1) of claim 2, wherein the parameter of the pump (3) is a pressure rating of the pump.

4. The pressurizer (1) of any one of claims 1 to 3, wherein the controller (7) is configured to repeatedly increase the duty cycle in response to the pressure signal indicating that the pressure of the fluid output by the pump (3) is approaching a user input setpoint pressure, and to halt power delivery to the motor (6) in response to the pressure signal indicating that the pressure of the fluid output by the pump is higher than the user input setpoint pressure.

5. The pressurizer (1) of any one of claims 1 to 3, wherein the controller (7) is configured to compare a measured pressure to a plurality of successively increasing thresholds, and to select a duty cycle corresponding to the first of the plurality of successively increasing thresholds that exceeds the measured pressure.

6. The pressurizer (1) of claim 5, wherein each of the plurality of thresholds corresponds to a different percentage of the pressure rating of the pump.

7. The pressurizer (1) of claim 3, wherein the controller (7) is configured to increase the duty cycle as the pressure signal approaches the pressure rating of the pump (3).

8. The pressurizer (1) of any one of the preceding claims, wherein the controller (7) is configured to adjust the duty cycle across successive control iterations, and to store a pressure signal of a previous iteration.

9. The pressurizer (1) of claim 8, wherein the controller (7) is configured to store an indicator of a potential leak condition in the event that the stored pressure signal of the previous iterations exceeds a current pressure signal.

10. The pressurizer (1) of claim 9, wherein the controller (7) is configured to halt delivery of power to the motor (6) in the event of the potential leak condition.

11. The pressurizer (1) of any one of claims 8 to 10, wherein the controller (7) is configured to increase a duty cycle of the PWM drive signal in the event that the stored pressure signal of the previous iteration does not exceed a current pressure signal by at least a threshold value.

12. The pressurizer (1) of any one of the preceding claims, wherein the controller (7) is configured to receive a gain setting, and adjust a duty cycle of the PWM drive signal based on the gain signal.

13. A method of operating a pressurizer (1) comprising a pump (3) driven by a motor (6), the method comprising:
sensing an output pressure of the pump;
generating a PWM drive signal based at least in part on the sensed output pressure; and
driving the motor with the PWM drive signal,
wherein generating the PWM drive signal comprises:
initially specifying a first duty cycle of the PWM drive signal, and further increasing this duty cycle where the sensed output pressure of the pump has increased.

14. The method of claim 13, wherein generating the PWM drive signal comprises:
selecting an initial PWM duty cycle;
comparing the sensed output pressure against a reference pressure;
adjusting the initial PWM duty cycle based on the comparison; and
providing the PWM drive signal with the adjusted PWM duty cycle.

## Patentansprüche

1. Druckerzeuger (1) zum Aufbauen von Druck eines Fluids in einem Behälter, wobei der Druckerzeuger umfasst:
eine Pumpe (3), die einen Auslass (16) aufweist, der dafür ausgelegt ist, das Fluid in den Behälter abzugeben;
einen Motor (6), der dafür konfiguriert ist, die Pumpe gemäß einem impulsbeitenmodulierten (Pulse-Width Modulated, PWM) Ansteuersignal anzutreiben;
einen Controller (7), der dafür konfiguriert ist, das PWM-Ansteuersignal an den Motor auszugeben; und
einen Wandler (19), der dafür konfiguriert ist, ein Drucksignal zu generieren, das einen Druck des von der Pumpe ausgegebenen Fluids anzeigt, und das Drucksignal an den Controller zu übermitteln, wobei der Controller dafür konfiguriert ist, anfänglich ein erstes Tastverhältnis des PWM-Ansteuersignals zu spezifizieren, und des Weiteren dafür konfiguriert ist, dieses Tastverhältnis zu erhöhen, wenn das Drucksignal anzeigt, dass der Druck des von der Pumpe ausgegebenen Fluids gestiegen ist.

2. Druckerzeuger (1) nach Anspruch 1, wobei der Controller (7) dafür konfiguriert ist, das Tastverhältnis des PWM-Ansteuersignals auf der Grundlage eines Parameters der Pumpe (3) zu justieren.

3. Druckerzeuger (1) nach Anspruch 2, wobei der Parameter der Pumpe (3) ein Nenndruck der Pumpe ist.

4. Druckerzeuger (1) nach einem der Ansprüche 1 bis 3, wobei der Controller (7) dafür konfiguriert ist, in Reaktion darauf, dass das Drucksignal angibt, dass sich der Druck des von der Pumpe (3) ausgegebenen Fluids einem vom Benutzer eingegebenen Solldruck nähert, das Tastverhältnis wiederholt zu erhöhen, und in Reaktion darauf, dass das Drucksignal angibt, dass der Druck des von der Pumpe ausgegebenen Fluids höher ist als der vom Benutzer eingegebene Solldruck, die Stromzufuhr zu dem Motor (6) zu unterbrechen.

5. Druckerzeuger (1) nach einem der Ansprüche 1 bis 3, wobei der Controller (7) dafür konfiguriert ist, einen gemessenen Druck mit mehreren sukzessive ansteigenden Schwellen zu vergleichen und ein Tastverhältnis auszuwählen, das der ersten der mehreren sukzessive ansteigenden Schwellen, die den gemessenen Druck übersteigt, entspricht.

6. Druckerzeuger (1) nach Anspruch 5, wobei jede der mehreren Schwellen einem anderen Prozentsatz des Nenndrucks der Pumpe entspricht.

7. Druckerzeuger (1) nach Anspruch 3, wobei der Controller (7) dafür konfiguriert ist, das Tastverhältnis in dem Maße zu erhöhen, wie sich das Drucksignal dem Nenndruck der Pumpe (3) nähert.

8. Druckerzeuger (1) nach einem der vorangehenden Ansprüche, wobei der Controller (7) dafür konfiguriert ist, das Tastverhältnis über aufeinanderfolgende Steuerungsiterationen hinweg zu justieren und ein Drucksignal einer vorherigen Iteration zu speichern.

9. Druckerzeuger (1) nach Anspruch 8, wobei der Controller (7) dafür konfiguriert ist, einen Indikator für einen potenziellen Leckzustand zu speichern, falls das gespeicherte Drucksignal der vorherigen Iterationen ein momentanes Drucksignal überschreitet.

10. Druckerzeuger (1) nach Anspruch 9, wobei der Controller (7) dafür konfiguriert ist, die Stromzufuhr zu dem Motor (6) im Fall eines potenziellen Lecks zu unterbrechen.

11. Druckerzeuger (1) nach einem der Ansprüche 8 bis 10, wobei der Controller (7) dafür konfiguriert ist, ein Tastverhältnis des PWM-Ansteuersignals zu erhöhen, falls das gespeicherte Drucksignal der vorherigen Iteration ein momentanes Drucksignal nicht um mindestens einen Schwellenwert überschreitet.

12. Druckerzeuger (1) nach einem der vorangehenden Ansprüche, wobei der Controller (7) dafür konfiguriert ist, eine Verstärkungseinstellung zu empfangen und ein Tastverhältnis des PWM-Ansteuersignals auf der Grundlage des Verstärkungssignals zu justieren.

13. Verfahren zum Betreiben eines Druckerzeugers (1), der eine durch einen Motor (6) angetriebene Pumpe (3) umfasst, wobei das Verfahren umfasst:
Erfassen eines Ausgabedrucks der Pumpe;
Generieren eines PWM-Ansteuersignals mindestens teilweise auf der Grundlage des erfassten Ausgabedrucks; und
Ansteuern des Motors mit dem PWM-Ansteuersignal, wobei das Generieren des PWM-Ansteuersignals umfasst:
anfängliches Spezifizieren eines ersten Tastverhältnisses des PWM-Ansteuersignals, und des Weiteren Erhöhen dieses Tastverhältnisses, wenn der erfasste Ausgabedruck der Pumpe gestiegen ist.

14. Verfahren nach Anspruch 13, wobei das Generieren des PWM-Ansteuersignals umfasst:
Auswählen eines anfänglichen PWM-Tastverhältnisses;
Vergleichen des erfassten Ausgabedrucks mit einem Referenzdruck;
Justieren des anfänglichen PWM-Tastverhältnisses auf der Grundlage des Vergleichs; und
Bereitstellen des PWM-Ansteuersignals mit dem justierten PWM-Tastverhältnis.

## Revendications

1. Pressuriseur (1) pour augmenter la pression d'un fluide dans un récipient, le pressuriseur comprenant :
une pompe (3) ayant une sortie (16) disposée pour délivrer le fluide au récipient ;
un moteur (6) configuré pour entraîner la pompe selon un signal d'attaque à impulsion modulée en largeur (PWM) ;
un contrôleur (7) configuré pour délivrer le signal d'attaque PWM au moteur ; et
un transducteur (19) configuré pour générer un signal de pression indicatif d'une pression du fluide en sortie de la pompe, et pour délivrer le signal de pression au contrôleur,
dans lequel le contrôleur est configuré pour spécifier initialement un premier cycle de service du signal d'attaque PWM et est en outre configuré pour augmenter ce cycle de service sur la base du signal de pression indiquant que la pression du fluide délivré par la pompe a augmenté.

2. Pressuriseur (1) selon la revendication 1, dans lequel le contrôleur (7) est configuré pour ajuster le cycle de service du signal d'attaque PWM en fonction d'un paramètre de la pompe (3).

3. Pressuriseur (1) selon la revendication 2, dans lequel le paramètre de la pompe (3) est une pression nominale de la pompe.

4. Pressuriseur (1) selon une quelconque des revendications 1 à 3, dans lequel le contrôleur (7) est configuré pour augmenter de façon répétée le cycle de service en réponse au signal de pression indiquant que la pression du fluide délivré par la pompe (3) approche d'une pression de consigne d'entrée d'utilisateur, et pour arrêter la fourniture d'énergie au moteur (6) en réponse au signal de pression indiquant que la pression du fluide délivré par la pompe est supérieure à la pression de consigne d'entrée d'utilisateur.

5. Pressuriseur (1) selon une quelconque des revendications 1 à 3, dans lequel le contrôleur (7) est configuré pour comparer une pression mesurée à une pluralité de seuils croissants successivement et pour sélectionner un cycle de service correspondant au premier de la pluralité de seuils des seuils croissants successifs qui dépassent la pression mesurée.

6. Pressuriseur (1) selon la revendication 5, dans lequel chacun de la pluralité de seuils correspond à un pourcentage différent de la pression nominale de la pompe.

7. Pressuriseur (1) selon la revendication 3, dans lequel le contrôleur (7) est configuré pour augmenter le cycle de service lorsque le signal de pression s'approche de la pression nominale de la pompe (3).

8. Pressuriseur (1) selon une quelconque des revendications précédentes, dans lequel le contrôleur (7) est configuré pour ajuster le cycle de service sur des itérations de commande successives, et pour mémoriser un signal de pression d'une itération précédente.

9. Pressuriseur (1) selon la revendication 8, dans lequel le contrôleur (7) est configuré pour stocker un indicateur d'une condition de fuite potentielle dans le cas où le signal de pression mémorisé des itérations précédentes dépasse un signal de pression actuel.

10. Pressuriseur (1) selon la revendication 9, dans lequel le contrôleur (7) est configuré pour arrêter la fourniture d'énergie au moteur (6) en cas de fuite potentielle.

11. Pressuriseur (1) selon une quelconque des revendications 8 à 10, dans lequel le contrôleur (7) est configuré pour augmenter un cycle de service du signal d'attaque PWM dans le cas où le signal de pression mémorisé de l'itération précédente ne dépasse pas un signal de pression actuel d'au moins une valeur seuil.

12. Pressuriseur (1) selon une quelconque des revendications précédentes, dans lequel le contrôleur (7) est configuré pour recevoir un réglage de gain et ajuster un cycle de service du signal d'attaque PWM sur la base du signal de gain.

13. Procédé de fonctionnement d'un pressuriseur (1) comprenant une pompe (3) entraînée par un moteur (6), le procédé comprenant de:
détecter une pression de sortie de la pompe ; générer un signal d'attaque PWM sur la base au moins en partie de la pression de sortie détectée ; et
entraîner le moteur avec le signal d'attaque PWM,
dans lequel la génération du signal d'attaque PWM comprend de:
spécifier initialement un premier cycle de service du signal d'attaque PWM, et augmenter davantage ce cycle de service lorsque la pression de sortie détectée de la pompe a augmenté.

14. Procédé selon la revendication 13 dans lequel la génération du signal d'attaque PWM comprend de:
sélectionner un cycle de service PWM initial; comparer la pression de sortie détectée avec une pression de référence ;
ajuster le cycle de service PWM initial sur la base de la comparaison ; et
fournir au signal d'attaque PWM le cycle de service PWM ajusté.
